# EUROPÄISCHE PATENTANMELDUNG

(11) **EP 0 716 904 A1**
(43) Veröffentlichungstag der Anmeldung: **19.06.1996**
(21) Anmeldenummer: 95119391.1
(22) Anmeldetag: 08.12.1995
(51) Int. Cl.: B25F 3/00, B25F 5/02, H01M 2/10, B24B 23/00

(54) **Netzunabhängige Handsschleifmaschine**

(30) Priorität: 15.12.1994 DE 4444826
(71) Anmelder: Gerd Eisenblätter GmbH, D-82538 Geretsried (DE)
(72) Erfinder: Eisenblätter, D-82549 Königsdorf (DE)
(74) Vertreter: Weber, Otto-Ernst, Dipl.-Phys.

(57) **Zusammenfassung**

Die Erfindung betrifft eine netzunabhängige Handschleifmaschine mit einem als Griff ausgebildeten quaderförmigen Längsteil (1), an dessen vorderen Ende sich ein Tragteil (3) anschließt, welches das Schleifelement (4) trägt. Die längs verlaufenden Kanten (8a-8d) des Längsteils sind abgerundet und die vier Längsflächen derart nach innen in Form von Mulden gebogen, daß einerseits der dadurch gebildete Innenraum des Längsteils als Halterung und Aufnahmeraum von vier würfelförmig angeordneten Energiespeicherelementen (6a-6d) dient und andererseits durch die so entstandene Form ein ergonomischer Griff zur Handhabung der Handschleifmaschine gebildet wird.

## Beschreibung

Die Erfindung betrifft eine netzunabhängige Handschleifmaschine mit einem als Energiespeicherelemente aufnehmenden Griff ausgebildeten quaderförmigen Längsteil, an dessen vorderem Ende sich ein Kupplungsteil und ein Tragteil anschließt, welches ein motorisch angetriebenes Schleifelement trägt.

Derartige Schleifmaschinen sind seit langem bekannt und werden insbesondere als Winkelschleifer oder Satiniergeräte in Form von netzunabhängigen oder netzbetriebenen Geräten angeboten. Netzunabhängige Geräte werden dabei mit Batterien oder Akkus betrieben. Werden Akkus verwendet, so weist ein derartiges Schleifgerät zudem eine Ladeschaltung mit oder ohne zugehörigem Netztransformator auf.

Typischerweise sind in einem solchen Gerät die Batterien oder Akkus und/oder der Antriebsmotor in einem als Handgriff ausgebildeten Längsteil untergebracht. Daran schließen sich weitere Bauelemente, z.B. Schalter, Getriebe oder die Schleifscheibe an.

Es hat sich gezeigt, daß eine derartige Ausgestaltung zum einen eine aufwendige Ausgestaltung des Innenraumes des Längsteils benötigt, um die Energiespeicherelemente, wie z.B. die Batterien oder Akkus, aufzunehmen und andererseits zu einer schlechten Handhabung der Handschleifmaschine durch die Ausgestaltung des als Griffteil dienenden Längsteils führt. Entweder führen große und leistungsfähige Energiespeicher zu einem unhandlichen zylindrischen oder quaderförmigen Griffteil, wodurch der Bedienkomfort stark eingeschränkt ist oder man konnte nur kleine, leistungsschwache Energiespeicher unterbringen, die nur kurze Arbeitsphasen erlauben, bevor eine Aufladung erforderlich wird.

Der Erfindung liegt die **Aufgabe** zugrunde, eine Handschleifmaschine gemäß dem Oberbegriff des Patentanspruchs 1 zu schaffen, die eine besonders gute Handhabung bei gleichzeitiger Unterbringung eines leistungsstarken Energiespeichers gewährleistet.

Die Lösung dieser Aufgabe erfolgt bei einer gattungsgemäßen Handschleifmaschine gemäß den kennzeichnenden Merkmalen des Patentanspruchs 1. Vorteilhafte Weiterbildungen sind in den abhängigen Ansprüchen beschrieben.

Nach dem Grundgedanken der Erfindung sind die längsverlaufenden Kanten des Längsteils abgerundet und die vier Längsflächen derart nach innen gebogen, daß sie in ihrer Form und Größe den Energiespeicherelementen angepaßt sind. Dadurch entfällt zum einen ein komplizierter innerer Aufbau des Längsteils und gleichzeitig wird ein besonders ergonomischer Handgriff geschaffen, der den Fingern besonders gute Eingriffmöglichkeiten bietet.

In einer vorteilhaften Weiterbildung ist der Innenraum so ausgebildet, daß er wenigstens vier Energiespeicherelemente aufnimmt. Sie sind in den Ecken einer viereckigen Querschnittsgrundfläche angeordnet. Beispielsweise ist diese ein Quadrat, ein Rechteck oder eine Raute. Dadurch kann gegenüber Ausführungsformen mit zwei oder drei Energiespeicherelementen die Speicherkapazität erhöht werden und zum anderen führt diese Anzahl bei Energiespeicherelementen in handelsüblichen Größen zu einem quaderförmigen Griffelement mit besonders günstigen Abmessungen mit einem ergonomischen Abstand.

In einer anderen Weiterbildung ist der Innenraum so ausgebildet, daß in der Mitte der auf der viereckigen Grundfläche angeordneten Energiespeicherelemente ein fünftes Energiespeicherelement angeordnet ist. Mit dieser Querschnittsform erreicht man insbesondere bei einer quaderförmig gestreckten Anordnung der Energiespeicherelemente eine besonders bevorzugte ergonomische Grifform.

Bevorzugterweise ist eine Verschlußkappe zum Verschluß des Längsteils vorgesehen, welche elektrische Verbindungselemente zum seriellen oder parallelen Verschalten der Energiespeicherelemente vorsieht. Je nach Verschaltung kann ein besonders leistungsstarker oder besonders lang andauernder Betrieb erreicht werden.

Vorteilhaft ist weiterhin die Vorsehung eines Griffteiles am hinteren Ende des Längsteils, mit dessen Hilfe das Längsteil leichter aus dem Getriebe herausgezogen werden kann, was bei Wartungsarbeiten oder einem Batteriewechsel wünschenswert sein kann.

Die grundsätzlichen Vorteile der Erfindung liegen darin, daß das als Griffteil ausgebildete Längsteil keine zusätzlichen aufwendigen Befestigungsvorrichtungen für die Energiespeicherelemente benötigt und daß durch die damit verbundene Formgebung ein besonders vorteilhaftes ergonomisches Griffteil ausgebildet wird, was insbesondere bei Schleifmaschinen zu einer leichteren Handhabung führt.

Nachfolgend wird die Erfindung anhand einer Zeichnung weiter erläutert. Im einzelnen zeigen die schematischen Darstellungen in:
- Fig. 1: eine perspektivische Darstellung einer Handschleifmaschine mit einer als Griffteil dienenden Energiespeichereinheit;
- Fig. 2: eine Querschnittsansicht des Griffteils gemäß Fig. 1;
- Fig. 3: eine Querschnittsansicht eines Griffteils gemäß einer zweiten Ausführungsform; und
- Fig. 4: eine Querschnittsansicht eines Griffteils gemäß einer dritten Ausführungsform.

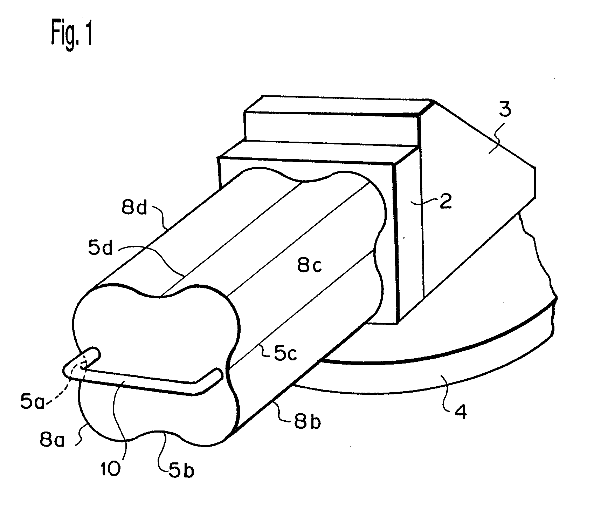

Figur 1 zeigt in einer perspektivischen Darstellung eine Handschleifmaschine mit einem als Handgriff ausgebildeten Längsteil 1, welches die Batterien oder Akkus enthält. Daran schließen stirnseitig an das Kupplungsteil 2, das z.B den Antriebsmotor, Einschaltelemente, Getriebe usw. (nicht dargestellt) beinhaltet und das Tragteil 3, welches das Schleifelement 4 trägt, an. Bedienelemente können sowohl auf dem Längsteil 1 als auch auf dem Kupplungsteil 2 angeordnet sein Der Längsteil 1 ist von der Querschnittsgrundform ähnlich einem Quader ausgebildet, weist jedoch vier stark abgerundete Längskanten 8a, 8b, 8c und 8d auf. Die Längsflächen 5a, 5b, 5c und 5d sind dann konkav ausgebildet, so daß sie in Richtung des Innenraums gebogen sind und auf diese Weise Längsmulden bilden. Das Längsteil 1 muß mit dem Kupplungsteil 2 eine feste, knickfreie Verbindung bilden. Dazu können beispielsweise Zapfen in dem Längsteil 1 vorgesehen sein, die in das Kupplungsteil 2 eingreifen und zu einer Versteifung führen. Andererseits ist es natürlich auch möglich, das Kupplungsteil 2 mit einer Ausnehmung auszubilden, deren Form an das Längsteil 1 angepaßt ist und in die das Längsteil 1 eingeschoben wird. Auch eine Schwalbenschwanzführung ist hier möglich. Außerdem kann an dem Ende des Längsteils 1, das in Fig. 1 am linken Bildrand liegt, ein zusätzlicher Griff angebracht sein, dessen Griffelement parallel zur Stirnfläche ausgerichtet ist und der ein Abziehen des Längsteils 1 aus dem Kupplungsteil 2 erleichtert, bzw. erst ermöglicht.

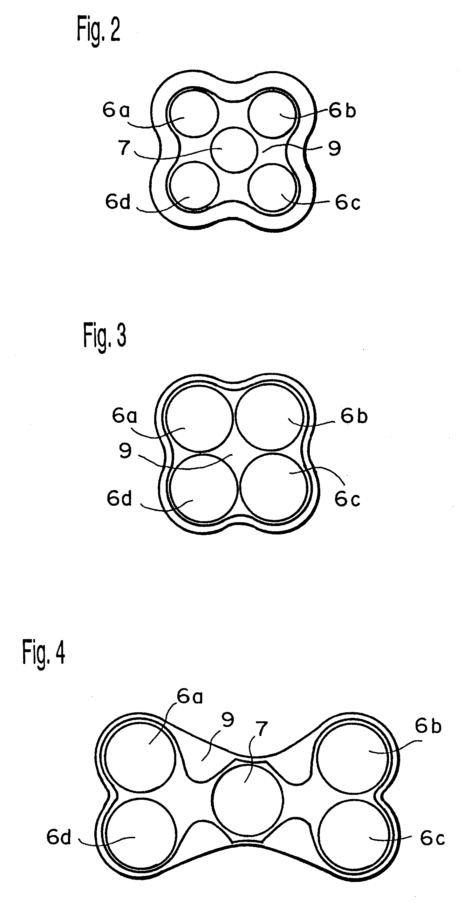

Figur 2 zeigt eine Querschnittsansicht des zugehörigen Innenraumes eines derartig gemäß Figur 1 ausgebildeten Längsteils 1. Mit 6a, 6b, 6c, 6d und 7 sind zylindrische Energiespeicherelemente, z.B. Batterien oder Akkus, bezeichnet. Durch die erfindungsgemäße Ausgestaltung der Seitenwände, d.h. der Längsflächen 5a, 5b, 5c und 5d und -kanten 8a, 8b, 8c und 8d wird ein Innenraum 9 geschaffen, der gleichzeitig als Halterung für die Energiespeicherelemente 6a, 6b, 6c, 6d und 7 dient und eine besonders ergonomische Formgebung für eine optimale Handhabung des als Griffteil dienenden Längsteils 1 gewährt. Dabei muß bei einer derartigen Formgebung des Längsteils 1 kein zusätzliches Halteelement für die Energiespeicherelemente 6a, 6b, 6c, 6d, 7 vorgesehen sein. Das Längsteil übernimmt hierbei sowohl innen als auch außen soweit wie möglich die zylindrische Form der Energiespeicherelemente.

Die Energiespeichereinheit kann dann wie dargestellt aus vier in den Ecken einer viereckigen Querschnittsgrundfläche angeordneten Energiespeicherelementen 6a, 6b, 6c und 6d und einem zentral angeordneten Energiespeicherelement 7 bestehen. Diese können sowohl einzeln einsetzbar oder auch als Batterie- bzw. Akkupack einsetzbar sein.

In Figur 3 ist eine Abwandlung von Figur 2 dargestellt, bei der lediglich vier Energiespeicherelemente 6a, 6b, 6c und 6d ebenfalls in den Ecken einer quadratischen Querschnittsgrundfläche angeordnet sind.

Wesentlich ist, daß die gesamte Energiespeichereinheit, die aus den Energiespeicherelementen 6a, 6b, 6c, 6d und evtl. 7 gebildet wird, eine Größe in Verbindung mit der Ummantelung in Form des Längsteils 1 aufweist, die optimal an die Hand eines das Längsteil 1 greifenden Anwenders angepaßt ist. Dies kann entweder durch eine geeignete Anzahl der Energiespeicherelemente 6a, 6b, 6c, 6d und 7 oder der Größe der Einzelelemente bzw. auch durch geeignete Wahl der Wandstärke der durch das Längsteil 1 gebildeten Ummantelung gewährleistet werden. Das Längsteil 1 kann dabei in bekannter Weise z.B. in Spritzgußtechnik einstückig hergestellt werden.

In Fig. 4 ist eine weitere Ausführungsform des Längsteils 1 dargestellt. Dabei sind die fünf Energiespeicherelemente 6a, 6b, 6c, 6d und 7 innerhalb eines rechteckigen Quaders mit ungleichen Seitenlängen angeordnet. Dadurch wird eine besonders gute Anpassung an die Handform möglich, da die Finger oben und unten in der Mulde zu liegen kommen, die nahe des Energiespeicherelementes 7 ausgebildet ist und die Seitenteile in einer der Grifflänge entsprechenden Größen ausgebildet werden können. Dabei ist zu beachten, daß die Ummantelung in der Weise ausgebildet ist, daß die Energiespeicherelemente einen festen Halt innerhalb des Längsteils 1 haben.

Bei den in den Fig. 1 bis 4 dargestellten Beispielen wird im normalen Betrieb der Handschleifmaschine das als Griff ausgebildete Längsteil 1 derart gehalten, daß der Daumenballen der rechten oder linken Hand und der Daumen in der durch die nach innen gebogene Längsfläche 5d , welche eine Mulde bildet, zu liegen kommt. Die übrigen Finger der Hand umgreifen den Griff und kommen dann in der gegenüberliegenden ebenfalls als Mulde ausgebildeten Längsfläche 5b zu liegen. Somit wird ein optimaler Halt in der Hand des Anwenders gewährleistet. Ein Abrutschen bei Verwendung der Schleifmaschine kann somit sicher verhindert werden. Bei einer symmetrischen Ausgestaltung des Innenraumes 9 des Längsteils 1, so wie es in den Fig. 2 und 3 dargestellt ist, kann derselbe Halt auch bei Drehung des Werkzeugs um beispielsweise 90 Grad gewährleistet werden. Dann sind die Längsflächen 5a und 5c diejenigen, in die die Hand des Anwenders eingreift. Dies ist insbesondere bei Arbeiten vorteilhaft, bei denen vertikal angeordnete Flächen bearbeitet werden müssen. In diesem Fall kann ohne Verlust der Griffeigenschaft umgegriffen werden und weiterhin eine günstige Handstellung während des Betriebs der Schleifmaschine gewährleistet werden.

Das Längsteil 1 kann durch eine Verschlußkappe, die an der gegenüber der Fläche, des sich anschließenden Tragteils 2 liegenden Fläche ausgebildet ist, in bekannter Weise verschlossen werden, wobei diese entsprechende elektrische Verbindungselemente aufweisen kann, um eine Parallel- oder Serienschaltung der einzeln eingesetzten Energiespeicherelemente 6a, 6b, 6c, 6d und 7 zu gewähren.

## Patentansprüche

1. Netzunabhängige Handschleifmaschine mit einem als die Energiespeicherelemente (6a, 6b, 6c, 6d) aufnehmenden Griff ausgebildeten quaderförmigen Längsteil (1) an dessen vorderen Ende sich ein Kupplungsteil (2) und ein Tragteil (3) anschließt, welches ein motorisch angetriebenes Schleifelement (4) trägt,
dadurch **gekennzeichnet,** daß
die längs verlaufenden Kanten (8a, 8b, 8c, 8d) des Längsteils (1) entsprechend der Konturen der Energiespeicherelemente (6a, 6b, 6c, 6d) abgerundet sind,
daß die Längsflächen (5a, 5b, 5c, 5d) des Längsteils (1) derart nach innen gebogen sind und die Größe des Längsteils (1) so gewählt ist, daß einerseits der durch die Längsflächen (5a, 5b, 5c, 5d) gebildete Innenraum (9) des Längsteils (1) als Halterung und Aufnahmeraum von wenigstens zwei Energiespeicherelementen (6a, 6b, 6c, 6d) dient und andererseits durch die so entstandene Form das Längsteil (1) einen ergonomischen Griff zur Handhabung der Handschleifmaschine bildet.

2. Handschleifmaschine nach Anspruch 1,
dadurch **gekennzeichnet**,
daß der Innenraum (9) so ausgebildet ist, daß er zur Aufnahme von wenigstens vier Energiespeicherelementen (6a, 6b, 6c, 6d) dient und daß das Längsteil (1) vier nach innen gebogene Längsflächen (5a, 5b, 5c, 5d) aufweist.

3. Handschleifmaschine nach Anspruch 2,
dadurch **gekennzeichnet,**
daß der Innenraum (9) so ausgebildet ist, daß in der Mitte der vier würfelförmig angeordneten Energiespeicherelemente (6a, 6b, 6c, 6d) ein fünftes Energiespeicherelement (7) angeordnet ist.

4. Handschleifmaschine nach einem der vorhergehenden Ansprüche,
dadurch **gekennzeichnet**,
daß eine Verschlußkappe zum Verschluß des Längsteils (1) vorgesehen ist, welche elektrische Verbindungselemente zum seriellen oder parallelen Verschalten der Energiespeicherelemente (6a, 6b, 6c, 6d, 7) vorsieht.

5. Handschleifmaschine nach einem der vorhergehenden Ansprüche,
dadurch **gekennzeichnet**,
daß das Längsteil (1) durch Steckkontakte oder Zapfen knickfest mit dem Kupplungsteil (2) verbunden ist.

6. Handschleifmaschine nach einem der vorhergehenden Ansprüche,
dadurch **gekennzeichnet**,
daß an dem Ende des Längsteils (1) welches dem Kupplungsteil (2) gegenüberliegt, ein zusätzliches Griffelement zum Lösen des Längsteils (1) aus dem Kupplungsteil (2) vorgesehen ist.
